# EUROPÄISCHE PATENTSCHRIFT

(11) **EP 3 510 556 B1**
(45) Veröffentlichungstag und Bekanntmachung des Hinweises auf die Patenterteilung: **24.07.2024**
(21) Anmeldenummer: 17754152.1
(22) Anmeldetag: 16.08.2017
(51) Int. Cl.: G05D 1/00, G08G 1/00, G06Q 10/08

(54) **SYSTEM UND VERFAHREN ZUM BETREIBEN VON AUTONOM FAHRENDEN NUTZFAHRZEUGEN**
SYSTEM AND METHOD FOR OPERATING AUTONOMOUSLY DRIVING UTILITY VEHICLES
SYSTÈME ET PROCÉDÉ PERMETTANT DE FAIRE FONCTIONNER DES VÉHICULES UTILITAIRES AUTONOMES

(30) Priorität: 08.09.2016 DE 102016116860
(43) Veröffentlichungstag der Anmeldung: 17.07.2019
(73) Patentinhaber: KNORR-BREMSE Systeme für Nutzfahrzeuge GmbH, 80809 München (DE)
(72) Erfinder: NEMETH, Huba, 1116 Budapest (HU); HORVATH, Csaba, 2051 Biatorbagy (HU); RAPP, Tamas, 1116 Budapest (HU); DUQUE VELEZ, Simon Felipe, 1053 Budapest (HU)
(74) Vertreter: LifeTech IP Spies & Behrndt Patentanwälte PartG mbB
(86) Internationale Anmeldenummer: PCT/EP2017/070728
(87) Internationale Veröffentlichungsnummer: WO 2018/046259

(56) Entgegenhaltungen:
- EP-A1- 2 698 294
- DE-A1- 10 322 765
- DE-A1- 10 322 824
- DE-A1- 102004 037 707
- US-A1- 2002 022 983
- US-A1- 2005 216 553
- US-A1- 2011 130 962
- US-A1- 2012 246 039
- US-B2- 7 769 644

## Beschreibung

Die vorliegende Erfindung bezieht sich auf ein System und ein Verfahren zum Betreiben von autonom fahrenden Nutzfahrzeugen und insbesondere auf ein autonomes Managementsystem und Nutzerschnittstellen.

Das autonome Betreiben von Nutzfahrzeugen ist ein Gebiet, welches zunehmend an Interesse gewinnt, wobei jedoch die technische Komplexität für autonome Systeme hoch ist. Andererseits sind in eingeschränkten Bereichen (z.B. Frachthöfe, Verladestationen oder andere zugangsbeschränkte Bereiche) potentielle Störungen eher beherrschbar. Daher können autonome Systeme dort leichter implementiert werden. Beispielsweise können in solchen Bereichen die Geschwindigkeiten geringgehalten werden und nur einem bestimmten Personenkreis kann der Zutritt gewährt werden. Trotzdem ist in der Regel ein Managementsystem für die autonomen Operationen erforderlich, um ein sicheres Betreiben und Überwachen von autonom fahrenden Fahrzeuge oder Fahrzeugsystemen sicherzustellen.

Die bereits bekannten Systeme zum autonomen Betreiben von Fahrzeugen beziehen sich in der Regel auf Personenkraftfahrzeuge (PKW), nicht jedoch auf autonome Systeme zum Betreiben von Nutzfahrzeugen in einem eingeschränkten Bereich. DE 10 2014 011 796 A1 offenbart beispielsweise ein System zum Verbinden eines autonomen Bereichs mit Fahrzeugen, um den Fahrzeugen Daten als Unterstützung bei der Navigation in dem Bereich bereitzustellen. Außerdem offenbart die US 8,816,610 B1 ein System mit einer Nutzerschnittstelle zum Anzeigen eines internen Zustandes eines autonomen Fahrsystems. Ein Steuercomputer sendet dabei Nachrichten an unterschiedliche Systeme des Fahrzeuges, um das Fahrzeug sicher zum Ziel zu manövrieren. Informationen auf einer elektrischen Anzeige geben den Passagieren eine Möglichkeit, die anstehenden Handlungen des Fahrzeugs nachzuvollziehen. Ferner offenbart DE 103 22 765 A1 einen automatisierten Speditionshof für autonom fahrende Lastkraftwagen. Weitere konventionelle Systeme sind in der US 8,903,592 B1 und US 8,825,261 B1 offenbart.

Diese bekannten Systeme bieten zwar für PKWs Vorteile, sind aber für Nutzfahrzeuge weniger von Interesse oder erfordern die Anwesenheit des Fahrers. Insbesondere für den autonomen Betrieb in Bereichen, wo gerade so wenig Personen wie möglich anwesend sein sollen (z.B. aus Sicherheitsgründen), bieten die bekannten System nur unzureichende Lösungen.

Daher besteht ein Bedarf nach Systemen zum Operieren von Nutzfahrzeugen, die die oben genannten Probleme lösen.

Zumindest ein Teil der oben genannten Probleme wird durch ein System und ein Verfahren zum Betreiben eines autonom fahrenden Nutzfahrzeuges nach Anspruch 1 oder Anspruch 14 gelöst. Die abhängigen Ansprüche definieren weitere vorteilhafte Ausführungsformen der Gegenstände nach den unabhängigen Ansprüchen.

Die vorliegende Erfindung bezieht sich auf ein System zum Betreiben eines autonom fahrenden Nutzfahrzeuges in einem eingeschränkten Bereich, wobei der eingeschränkte Bereich eine Zufahrt, eine Ausfahrt und zumindest ein Zielpunkt aufweist, wo eine Handlung an dem Nutzfahrzeug ausführbar ist. Das System umfasst ein Fahrzeugschnittstellenmodul, ein Fahrerschnittstellenmodul und ein Betreiberschnittstellenmodul. Das Fahrzeugschnittstellenmodul stellt eine Schnittstelle für das Fahrzeug bereit. Das Fahrerschnittstellenmodul stellt eine Kommunikationsschnittstelle für den Fahrer bereit. Das Betreiberschnittstellenmodul stellt eine Kommunikationsschnittstelle für den Betreiber des eingeschränkten Bereiches bereit. Das Fahrzeugschnittstellenmodul, das Fahrerschnittstellenmodul und das Betreiberschnittstellenmodul umfassen ein mobiles elektronisches Gerät und sind ausgebildet, um miteinander Informationen auszutauschen. Das Fahrerschnittstellenmodul ist ausgebildet ist, um zumindest die folgenden Funktionen bereitzustellen:
- eine Verbindung zu dem Betreiber herzustellen (z.B. wenn eine Funkinfrastruktur des Bereichs detektiert wurde),
- eine Übergabe des Fahrzeuges von dem Fahrer an den Betreiber durchzuführen (z.B. wenn eine Verbindung zu der Funkinfrastruktur hergestellt wurde oder das Betreiberschnittstellenmodul eine Anfrage gestellt hat);
- eine Trennung von dem Betreiber nur dann durchzuführen, wenn der Fahrer die Verantwortung über das Fahrzeug übernommen hat (z.B. nach einer optionalen Rückmeldung).

Beispielsweise können das Fahrzeugschnittstellenmodul, das Fahrerschnittstellenmodul und das Betreiberschnittstellenmodul, die der Einfachheit wegen im Folgenden auch einfach als Schnittstellenmodule bezeichnet werden, für diesen Zweck bestimmte elektronische Geräte sein, bzw. in solchen integriert sein. Diese Schnittstellen können zumindest teilweise Steuergeräte sein, die durch installierte Software ausgebildet sind, die entsprechenden Funktionen zu erfüllen. Der Betreiber kann eine Person, aber auch ein System sein (z.B. ein Managementsystem), welches den eingeschränkten Bereich und alle Aktivitäten darin steuern und überwachen kann. Der Betreiber kann ebenfalls als ein geeignetes Softwareprodukt implementiert sein, um die entsprechenden Aufgaben automatisch auszuführen.

Der eingeschränkte Bereich kann beispielsweise ein Verladehof (zum Be- und Entladen von Nutzfahrzeugen) oder ein Frachthof, ein Bus-Bahnhof oder aber auch ein Fährschiff, eine Eisenbahnverladestation (um das gesamte Nutzfahrzeug zu verladen), ein Flugzeug u.a.m. sein.

Das Fahrzeugschnittstellenmodul ist eine Schnittstelle für das Nutzfahrzeug, um darüber das Nutzfahrzeug zu steuern (z.B. Beschleunigen, Bremsen, Lenken) oder Sensordaten aus dem Nutzfahrzeug auszulesen. Das Fahrerschnittstellenmodul kann bestimmte Funktionen und/oder Informationen bereitstellen.

Unter dem Begriff "Handlungen" sollen im Rahmen der vorliegenden Erfindung alle Aktivitäten mit oder um ein Nutzfahrzeug verstanden werden. Dies umfasst beispielsweise ein autonomes Fahren (beschleunigen, bremsen, lenken), ein Beladen, ein Entladen, ein Waschen, ein Betanken, ein Aufladen von Batterien etc.

Das Fahrerschnittstellenmodul ist beispielsweise ausgebildet, um zumindest eine der folgenden Funktionen bereitzustellen:
- den Fahrer des Nutzfahrzeuges in Bezug auf einen tatsächlichen Lieferstatus zu informieren und zu beraten (z.B. basierend auf Frachteinschränkungen, einer Verfügbarkeit von Zielfrachthöfen und anderen Parametern), um den Fahrer bei einer Optimierung einer Transfergeschwindigkeit zu helfen,
- eine Nachricht von/zu weiteren Teilnehmern, die mit der Bereichs-Infrastruktur verbunden sind, zu empfangen/zu senden.

Die Übergabe der Verantwortung über das Fahrzeug kann über physische oder softwareimplementierte Schaltelement (Schalter, Knöpfe, Schieber, etc.) geschehen. Das Senden von Nachrichten kann beispielsweise über Kommunikationssoftware, SMS, E-Mail oder anderen Push-Nachrichtenmittel, insbesondere in drahtloser Form, geschehen.

Optional ist das Fahrerschnittstellenmodul weiter ausgebildet, um Informationen über zumindest eines der folgenden Themen bereitzustellen:
- eine Verfügbarkeit von bekannten Infrastrukturen des Bereichs (z.B. dem F ahrzeugschn ittstellenmodul),
- einen Verbindungsstatus zu einer Bereichs-Infrastruktur von dem Fahrzeugschnittstellenmodul und/oder dem Fahrerschnittstellenmodul,
- Identifizierung einer Verantwortung über das Nutzfahrzeug,
- eine voraussichtliche Fertigstellungszeit der Handlung an dem Nutzfahrzeug,
- eine vorgesehene Position des Nutzfahrzeuges zur Rückgabe der Verantwortung über das Nutzfahrzeug an den Fahrer,
- eine Ladung und Anweisungen für eine erfolgreiche Auslieferung, insbesondere über eine beabsichtigte Lieferzeit und über eine geschätzte Lieferzeit,
- Handlungen, die während des autonomen Fahrens ausgeführt wurden, insbesonderen Zeitdauer auf dem eingeschränkten Bereich, Zeitdauer an den Ladestationen oder anderen Zielorten, die von dem Nutzfahrzeug angefahren wurden, Wartezeiten seit Abschluss der Beladung, aufgetretene Fehler, gefährliche Situationen, die während des autonomen Betriebs aufgetreten sind, oder Ereignisse während einer Übernahme oder Übergabe, Statusinformationen des Fahrzeuges.

In dem eingeschränkten Bereich kann ein Mitarbeiter mit einem personenbezogenen Schnittstellenmodul tätig sein und zumindest eines der Schnittstellenmodule (d.h. das Fahrzeugschnittstellenmodul oder das Fahrerschnittstellenmodul oder das Betreiberschnittstellenmodul) kann ausgebildet sein, um eine Verbindung zu dem personenbezogenen Schnittstellenmodul herzustellen, um mit dem Mitarbeiter in Verbindung zu treten.

Das personenbezogene Schnittstellenmodul kann wiederum bestimmte Funktionen und/oder Informationen bereitstellen.

Das personenbezogene Schnittstellenmodul ist beispielsweise ausgebildet, um zumindest eine der folgenden Funktionalitäten bereitzustellen:
- dem Mitarbeiter zu erlauben, eine Handlung an einem verfügbaren Nutzfahrzeug zu starten, zu unterbrechen oder fertigzustellen, insbesondere unter Nutzung eines physischen oder Software-implementierten Schalters oder Knopfes,
- mehr Zeit zur Fertigstellung einer Handlung zu beantragen, falls die Handlung nicht in einem vorbestimmten Zeitrahmen, der durch den Betreiber definiert ist, fertigstellbar ist, insbesondere unter Nutzung eines physischen oder Software-implementierten Schalters oder Knopfes,
- Rückgabe des Nutzfahrzeuges an den Betreiber, um weitere autonome Handlungen auszulösen,
- Nachrichten von/an weiteren Teilnehmern, die mit der Bereichs-Infrastruktur in Verbindung stehen, zu empfangen/zu senden,
- Verfolgung von jedem Frachtteil, insbesondere bei Integration der personenenbezogener Schnittstelle in ein Betreibersystem (z.B. Managementsystem), mit einer individuellen Frachtidentifikation (z.B. ein Barcode oder QR-Code oder durch andere Mittel) zu ermöglichen,
- Hochladen von Frachtinformationen (z.B. über eine Beladung oder Entladung) an den Betreiber des eingeschränkten Bereiches (z.B. zusammen mit der individuellen Frachtidentifikation).

Außerdem kann das personenbezogenen Schnittstellenmodul optional ausgebildet sein, um Informationen über zumindest eines der folgenden Themen bereitzustellen:
- eine Liste von Mitarbeitern, die für eine Handlung zur Verfügung stehen, die eine Handlung ausführen oder eine Handlung fertiggestellt haben,
- Zielzeiten (z.B. für die Fertigstellung der Handlungen) für jedes Fahrzeug, an dem gerade Handlungen ausgeführt werden,
- einen Verbindungszustand zu der Bereichs-Infrastruktur, wobei der Verbindungszustand dem Fahrzeug- und/oder dem Fahrerschnittstellenmodul bereitgestellt wird,
- Ladegut, welches in dem Fahrzeug zu beladen oder zu entladen ist, insbesondere mit Angabe einer Quelle, eines Zieles und/oder von Spezialanweisungen.

Ebenso kann das Betreiberschnittstellenmodul bestimmte Funktionen und/oder Informationen bereitstellen.

Das Betreiberschnittstellenmodul ist beispielsweise ausgebildet, um zumindest eine der folgenden Funktionen bereitzustellen:
- Verbindungen zu dem Nutzfahrzeug, dem Fahrerschnittstellenmodul und/oder dem Mitarbeitersteuerschnittstellenmodul bereitzustellen,
- eine manuelle oder automatische Übergabe der Verantwortung über das Nutzfahrzeug zu erlauben oder durchzuführen,
- eine manuelle Definition oder die Ausführung einer automatischen Definition von Zielorten für das autonome Nutzfahrzeug zu ermöglichen,
- Herunterladen von kartografische Daten des eingeschränkten Bereiches und ein Erzeugen und ein Herunterladen einer optimalen Streckenführung zu Zielorten für das autonome Nutzfahrzeug zu ermöglichen,
- Einstellen einer manuellen Zielzeit oder Erzeugen einer automatischen Zielzeit für jeden Stand der Handlung an dem Fahrzeug zu ermöglichen,
- ein manuelles oder ein automatisches Starten und Beenden von Handlungen an dem Nutzfahrzeug zu ermöglichen,
- Handhabung von Informationen, die von dem personenbezogenen Schnittstellenmodul des Mitarbeiters erhalten werden, um den Fahrzeugzustand und eine verstrichene und eine verbleibende Zeitdauer für jedes Fahrzeug in den eingeschränkten Bereich zu aktualisieren;
- eine manuelle oder automatische Übergabe der Verantwortung über das Nutzfahrzeug auf eine Anfrage des Fahrers an den Fahrer zu ermöglichen,
- ein Senden und ein Empfangen von Nachrichten von Teilnehmern, die mit der Bereichs-Infrastruktur verbunden sind, zu erlauben.

Die Zielorte können beispielsweise Verladestationen, Speicherhäuser, Parkplätze, Waschanlagen, Zugwagons oder andere Orte in dem eingeschränkten Bereich sein.

Ein Stand der Handlung (Handlungszustand) kann beispielsweise durch zumindest eine der folgenden Eigenschaften bestimmt sein: ob das Fahrzeug mit einem Netzwerk verbunden ist, sich bewegt, steht, gerade beladen oder entladen wird, auf einen Fahrer wartet oder ein Fehler aufgetreten ist. Die Information(en) zur tatsächlichen Fracht kann/können beispielsweise eine Priorität, eine Gültigkeit, die Art der Fracht (z.B. Tiere, vergängliche Nahrung und Anderes) umfassen.

Weiterhin ist das Betreiberschnittstellenmodul optional ausgebildet, um Informationen über zumindest eines der folgenden Themen bereitzustellen:
- einen Verbindungszustand von jedem Fahrzeug innerhalb des eingeschränkten Bereiches,
- einen Betriebszustand von jedem Fahrzeug in dem eingeschränkten Bereich,
- eine Position und Richtung von jedem Fahrzeug auf einer graphischen Karte des eingeschränkten Bereiches,
- von dem Fahrzeug übertragene Sensorsignale, die sich auf eine Überblicksdarstellung und/oder eine Frontaldarstellung und/oder einer anderen Perspektive beziehen,
- eine Reihe oder Reihenfolge von Zielorten für jedes Fahrzeug,
- eine abgelaufene und eine voraussichtlich verbleibende Zeit und eine Abschlusszeit an einem Zielort für eine Handlung des Fahrzeuges in dem eingeschränkten Bereich,
- eine tatsächliche Fracht von jedem direkt oder indirekt gesteuerten Fahrzeug.

Optional umfasst das System Mittel, um Informationen über eine Fracht, die verladen oder entladen wurde, mit anderen eingeschränkten Bereichen zu teilen oder mit einem anderen Frachtmanagementsystem über weitere Schnittstellen auszutauschen.

Optional ist das Fahrerschnittstellenmodul mit einer globalen Navigationssoftware integriert, um eine kontinuierliche Erneuerung der voraussichtlichen Lieferzeit von Frachtgütern zu ermöglichen.

Optional ist das Fahrerschnittstellenmodul ausgebildet, um eine internetbasierte Kommunikation mit Zielfrachthöfen auszuführen, während das Fahrzeug mit der Fracht sich bewegt, um eine Optimierung des Frachtflusses bei den Zielfrachthöfen zu erreichen.

Optional umfassen die Schnittstellenmodule (z.B. das Fahrzeugschnittstellenmodul, das Fahrerschnittstellenmodul und das Betreiberschnittstellenmodul) zumindest eine der folgenden Komponenten oder sind darin enthalten: eine Computereinheit, ein Mobiltelefon, ein Tablett, eine Funknetzwerkseinheit (z.B. basierend auf Bluetooth, GSM), die ausgebildet, um zumindest das eingeschränkte Gebiet abzudecken.

Die vorliegende Erfindung bezieht sich auch auf ein (zentralisiertes) Managementsystem mit einer oder mehreren Systemen, wie sie zuvor definiert wurden, einem Frachtmanagement, und eine Schnittstelle für eine Überwachungsperson. Das Managementsystem ist ausgebildet, um zumindest eine der folgenden Funktionen bereitzustellen:
- automatische Bestimmung von Zielorte, basierend auf dem genauen Frachtfluss und dem Ort eines gegebenen Frachthofes, um so die Zeit zu optimieren, die ein Nutzfahrzeug auf einem Frachthof verbringt,
- Informationen an der/den Schnittstelle(n) bereitstellen, um mehrere eingeschränkte Bereiche einschließlich darauf autonom operierender Nutzfahrzeuge durch die Überwachungsperson zu überwachen.

Ein Vorteil dieser Systeme besteht darin, dass damit auch die Größe der eingeschränkten Bereiche und die Kosten der Fracht auf dem Hof optimiert werden können.

Die vorliegende Erfindung bezieht sich auch auf ein Verfahren, bei dem die beschriebenen Funktionen ausgeführt oder die Informationen bereitgestellt werden.

Dieses Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor (z.B. eine der Fahrzeugsteuereinheiten) läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein und ebenfalls das beschriebene Steuermodul oder die Warnmodulsteuerung umfassen, die einen entsprechenden Mikroprozessor aufweisen, der einen Software-Code ausführen kann.

Ausführungsbeispiele stellen eine Lösung für ein effizientes Management von autonom betriebenen Nutzfahrzeugen auf einem eingeschränkten Bereich bereit, und zwar durch ein System von zumindest drei Akteuren: ein Fahrzeug, ein Fahrer und ein Betreiber, wobei optional zumindest ein Verladearbeiter (Mitarbeiter) in dem System über seine eigene Schnittstelle integriert sein kann. Die zumindest drei Akteure sind unter Nutzung der Bereichs-Infrastruktur oder über das Internet miteinander verbunden.

Ausführungsbeispiele bieten darüber hinaus die folgenden Vorteile:
Wenn Fahrzeuge autonom betrieben werden, ist beispielsweise eine kontinuierliche manuelle Überwachung nicht erforderlich. Außerdem ist ein Frachtflussmanagement ein bereits gut verstandenes Gebiet in Logistiksystemen. Mitarbeiter, die beispielsweise manuelle Tätigkeiten ausführen können, sind nur für Handlungen erforderlich, die eine manuelle Wechselwirkung erfordern. Im Fall von hochgradig automatisierten Bereichen erfordern jedoch die meisten Handlungen keine manuelle Hilfe. So sind Handlungen wie beispielsweise ein Waschen, ein Auftanken, ein automatisches Beladen von Tankern oder speziellen Zugfahrzeugen/Trailern, etc. ohne manuell handelnde Mitarbeiter ausführbar. Daher können solche Tätigkeiten ebenfalls durch ensprechende Steuermodule/Automaten oder allgemein Computern übernommen werden, die als automatisierte Mitarbeiter oder Akteure agieren.

Ausführungsbeispiele erlauben außerdem ein transparentes Umschalten der Steuerung zwischen verschiedenen Teilnehmern des autonomen Systems des eingeschränkten Bereiches, während die Verantwortung über das Nutzfahrzeug stets klar geregelt bleibt.

Im Gegensatz zu den bekannten Systemen, nutzen Ausführungsbeispiel nicht nur die Kommunikation zwischen Akteuren oder herunterladene Karten. Vielmehr werden die Handlungen der einzelnen Akteure in ihrem Umfeld und ihre genauen Aufgaben so präzise definiert, dass Ausführungsbeispiele auf beliebige Anwendungfelder anwendbar sind. Die erforderlichen Funktionen sind den Akteuren zugeordnet, um ein hochgradig automatisiertes und optimiertes Management zu erreichen.

Außerdem bieten Ausführungsbeispiele gegenüber den bekannten Systemen noch den Vorteil, dass ein Fahrer oder andere Personen nicht in der Fahrzeugkabine verbleiben muss oder darf, sondern alle Informationen, die für die externen Akteure erforderlich sind, eindeutig zugeordnet werden, um in der Lage zu sein, die Kontrolle über das autonom arbeitende Nutzfahrzeug zu übernehmen und die entsprechenden internen Zustände zu überwachen.

Die eindeutige Zuordnung von Funktionen und Informationen (d.h. wer welche Funktion oder Information bereitstellt) erlaubt es Ausführungsbeispielen die oben genannte Sicherheit und Effizienz des autonomen Systems zu erreichen. Missverständnisse darüber, wer wofür zuständig ist, sind somit ausgeschlossen.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt ein Ausführungsbeispiel für ein System zum Betreiben eines autonom fahrenden Nutzfahrzeuges in einem eingeschränkten Bereich.
- Fig. 2: zeigt ein Ausführungsbeispiel für ein Managementsystem für einen eingeschränkten Bereich.
- Fig. 3: zeigt ein weiteres Ausführungsbeispiel für eine mögliche Systemarchitektur, die mehrere eingschränkte Bereiche umfasst.

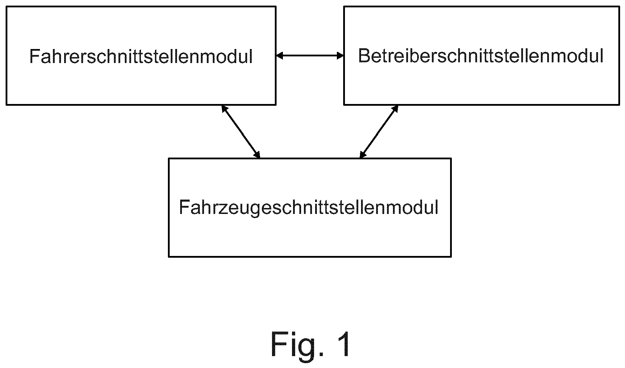

**Fig. 1** zeigt ein Ausführungsbeispiel für ein System, das geeignet ist zum Betreiben von autonom fahrenden Fahrzeugen in einem eingeschränkten Bereich. Der eingeschränkte Bereich umfasst eine Zufahrt, eine Ausfahrt und zumindest ein Zielpunkt aufweist, wo eine Handlung an dem Nutzfahrzeug ausführbar ist. Das System umfasst ein Fahrzeugschnittstellenmodul 110, das eine Schnittstelle für das Fahrzeug bereitstellt, ein Fahrerschnittstellenmodul 120, das eine Kommunikationsschnittstelle für den Fahrer bereitstellt, und ein Betreiberschnittstellenmodul 130, das eine Kommunikationsschnittstelle für den Betreiber des eingeschränkten Bereiches bereitstellt. Das Fahrzeugschnittstellenmodul, das Fahrerschnittstellenmodul und das Betreiberschnittstellenmodul sind ausgebildet, um miteinander Informationen auszutauschen.

Die gezeigten Schnittstellenmodule 110, 120, 130 können über ein bestehendes Netzwerk (z.B. Intranet, Internet, etc.) miteinander verbunden werden. Es ist jedoch ebenfalls möglich, dass die Schnittstellenmodule 110, 120, 130 bei Bedarf sich zu einem adhoc Netzwerk verbinden und Informationen austauschen. Nach Abschluss der Handlungen an dem Nutzfahrzeug und wenn das Nutzfahrzeug den eingeschränkten Bereich verlassen hat, können diese Netzwerkverbindungen wieder getrennt werden. Wenn ein neues Nutzfahrzeug in den eingeschränkten Bereich einfährt, kann erneut eine temporäre Netzwerkstruktur aufgebaut werden.

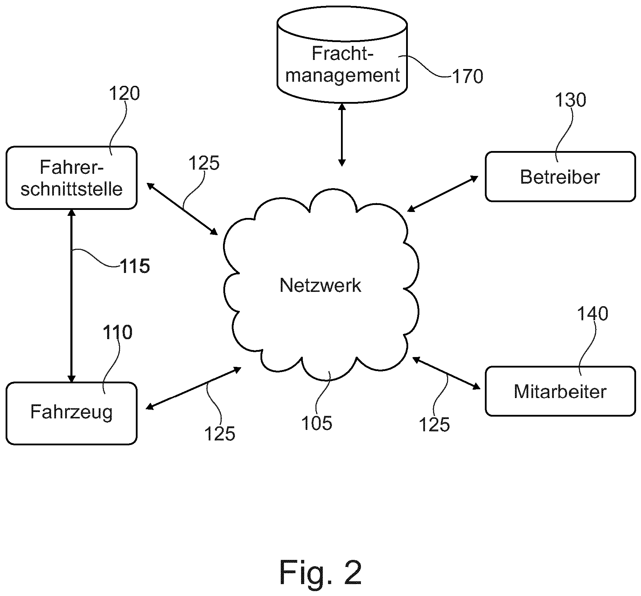

**Fig. 2** zeigt ein Ausführungsbeispiel für ein Managementsystem für einen eingeschränkten Bereich, wobei das Fahrzeugschnittstellenmodul 110, das Fahrerschnittstellenmodul 120 und das Betreiberschnittstellenmodul 130 über ein Netzwerk 105 (z.B. Intranet, Internet oder eine andere Netzwerkstruktur) miteinander verbunden sind. Außerdem sind das Fahrzeugschnittstellenmodul 110, das Fahrerschnittstellenmodul 120 und das Betreiberschnittstellenmodul 130 mit einem optionalen personenbezogenen Schnittstellenmodul 140 eines Mitarbeiters verbunden. Dazu werden Verbindungen 125 der einzelnen Module zu dem Netzwerk 105 hergestellt. Die Verbindungen 125 können beispielsweise durch eine drahtlose, optional verschlüsselte (über zumindest einen Kanal), Kommunikation zwischen den Modulen hergestellt werden.

Optional sind außerdem das Fahrzeugschnittstellenmodul 110 und das Fahrerschnittstellenmodul 120 über eine lokale Netzwerkverbindung 115 wie beispielsweise Bluetooth oder WLAN miteinander verbunden. Eine solche lokale Netzwerkverbindung ist ebenfalls zwischen den anderen Komponenten möglich (nicht gezeigt). Weiterhin ist in dem Ausführungsbeispiel der Fig. 2 ein Frachtmanagement 170 gezeigt, welches ebenfalls eine zugehörige Schnittstelle aufweist, um über das Netzwerk 105 mit dem Fahrzeugschnittstellenmodul 110 und/oder dem Fahrerschnittstellenmodul 120 und/oder dem Betreiberschnittstellenmodul 130 zu kommunizieren.

Bei weiteren Ausführungsbeispielen ist das personenbezogene Schnittstellenmodul 140 des weiteren Mitarbeiters ausgebildet, um in das Managementsystem integriert zu werden, um so die Verfolgung von jedem Frachtteil mit einer individuellen Güteridentifikation (z.B. ein Barcode oder QR-Code oder durch andere Mittel) zu ermöglichen. Das Schnittstellenmodul 140 des Mitarbeiters kann alle Frachtlade- und Entladeinformationen an den Betreiber des eingeschränkten Bereiches weiterleiten.

Das in der Fig. 2 gezeigte System stellt somit insbesondere eine Architektur (Bereichs-Infrastruktur) für ein einziges lokales Managementsystem dar. In einem solchen System sind alle Akteure (z.B. das Fahrzeug, der Fahrer, der Betreiber, der Mitarbeiter), die zum Betreiben des eingeschränkten Bereiches miteinander kommunizieren, über das lokale (drahtlose) Netzwerk 105 miteinander verbunden. Außerdem ist es möglich, dass nur diese Akteure Zugang zu dem Netzwerk 105 haben. Optional kann das Managementsystem auch nur lokal auf dem eingeschränkten Bereich operieren und dort empfangbar sein.

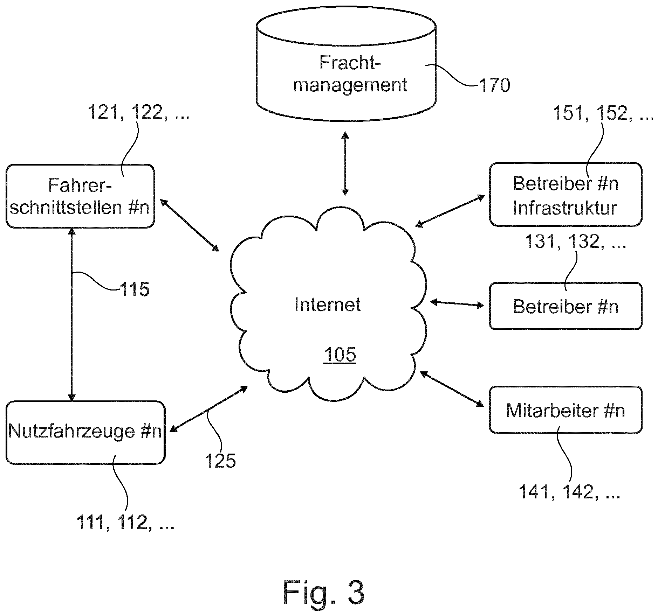

**Fig. 3** zeigt ein weiteres Ausführungsbeispiel für eine mögliche Systemarchitektur, die mehrere Systeme (z.B. für mehrere eingeschränkte Bereiche) aufweist. Die Verbindung zwischen den Akteuren kann in diesem Fall über das Internet 105 oder ein anderes Weitverkehrsnetzwerk (WAN, engl. wide area network) erfolgen.

In dem gezeigten Ausführungsbeispiel kann für jedes Fahrzeug, für jeden Fahrer und für jedes Managementsystem ein separates Schnittstellenmodul ausgebildet sein. So umfasst das Ausführungsbeispiel eine Vielzahl von Fahrzeugschnittstellenmodulen 111, 112, ..., eine Vielzahl von Fahrerschnittstellenmodulen 121, 122, ... und eine Vielzahl von Betreiberschnittstellenmodulen 131, 132, ..., die alle über das Netzwerk 105 miteinander verbunden sind. Optional sind wieder Mitarbeiter in den eingeschränkten Bereichen tätig, die ebenfalls eine Vielzahl von personenbezogenen Schnittstellenmodule 141, 142, ... aufweisen. Darüber hinaus sind über das Netzwerk 105 mehrere Bereichs-Infrastrukturen 151, 152, ... mit anderen Teilnehmern des Systems verbunden. Wie auch in der Fig. 2, umfasst das System der Fig. 3 ein Frachtmanagement 170, welches mit allen Akteuren verbunden ist.

Der Zugang der Akteure zu dem Netzwerk 105 kann wieder über Verbindungen 125 erfolgen, die wieder verschlüsselte, insbesondere drahtlose, Kommunikationskanäle bereitsstellen kann. Die Verbindung zwischen den einzelnen Fahrern und Fahrzeugen kann über lokale Bluetooth- oder WLAN-Netzwerkverbindungen 115, die beispielsweise von den Fahrzeugen bereitsgestellt werden kann, erfolgen.

Ein Vorteil der gezeigten Architektur besteht in der Zentralisierung der Managementsysteme und seiner Funktionen. Damit ergibt sich die Möglichkeit, mehrere eingeschränkte Bereiche (z.B. Frachthöfe) einschließlich der Nutzfahrzeuge, die auf den einzelnen Frachthöfen autonom operiert werden, durch eine einzige Person zu überwachen. Dadurch können außerdem die Kosten gesenkt werden und Lieferungen können optimiert werden. Beispielsweise können entfernt gelegenen (oder externen) Betreiber-Managementsystemen die Möglichkeit gegeben werden, auf globale Frachtinformationen in dem Frachtmanagement 170 zuzugreifen und diese zur Optimierung zu nutzen.

Die gezeigten Ausführungsbeispiele stellen die autonome Funktionsweise beispielsweise nur in dem eingeschränkten Bereich(en) bereit, sodass eine ausreichende Infrastruktur und technischer Ausstattung für die Operation von Nutzfahrzeugen sichergestellt werden kann. Dazu erfüllen die Akteure insbesondere die folgenden Funktionen, wozu die Schnittstellenmodule genutzt werden:
Wenn das Nutzfahrzeug in den eingeschränkten Bereich einfährt und der Bereich eine autonome Operation unterstützt, kann der mögliche autonome Modus transparent als eine Möglichkeit zum Einschalten verfügbar gemacht werden. Beispielswiese kann dies dem Fahrer auf seinem Schnittstellenmodul 120 angezeigt werden, so dass er in der Lage ist, sich mit der Infrastruktur des eingeschränkten Bereiches unter Nutzung eines geeigneten Managementsystems zu verbinden.

Gemäß Ausführungsbeispielen kann der Fahrer dazu bei Einfahrt in den eingeschränkten Bereich eine Übergabe des Fahrzeuges anfragen. Eine entsprechende Gegenstelle von der Managementseite (Betreiber) kann dann die Verantwortung über das Fahrzeug von dem Fahrer übernehmen. Nach dieser Handlung wird der autonome Fahrzeugmodus aktiviert und der Fahrer trägt keine Verantwortung mehr über das Fahrzeug.

Gemäß Ausführungsbeispielen kann der Betreiber Zielpositionen definieren (z.B. Ladestationen, Parkplätze oder Ähnliches) und das Nutzfahrzeug automatisch dorthin navigieren. Außerdem kann der Betreiber das Nutzfahrzeug anhalten und erneut starten. Dies kann beispielsweise aus Sicherheitsgründen erforderlich sein. Außerdem kann der Betreiber den Fahrzeugzustand und die Umgebung ständig überwachen.

Da es häufiger vorkommen kann, dass verschiedene Nutzfahrzeuge auf dem eingeschränkten Bereich operieren, kann der Betreiber alle Nutzfahrzeuge überwachen und steuern.

Wenn ein Nutzfahrzeug seinen Zielpunkt erreicht hat, kann eine bestimmte Be- oder Entladung durchgeführt werden. Dies kann beispielsweise durch einen Mitarbeiter (eine Person) geschehen, der durch das System autorisiert ist, die entsprechenden Arbeiten auszuführen. Beispielsweise kann sich der Mitarbeiter um die Ladung von einem oder mehreren Nutzfahrzeugen kümmern. Wenn ein beispielhafter Entlade- oder Beladevorgang abgeschlossen ist, kann der Mitarbeiter den Betreiber darüber informieren (z.B. dass ein bestimmtes Nutzfahrzeug die Handlung an einer bestimmten Ladestation abgeschlossen hat). Optional kann die Arbeit des Mitarbeiters auch durch eine Maschine (Roboter) übernommen werden.

Wenn schließlich alle Handlungen auf dem eingeschränkten Bereich abgeschlossen sind, übernimmt der Fahrer die Verantwortung über das Fahrzeug zurück, schaltet den autonomen Modus aus und kann mit dem Fahrzeug von dem eingeschränkten Bereich wegfahren.

Die Integration solcher intelligenten autonomen Fahrzeugmanagementsysteme (wie in der Fig. 3) mit einem Frachtmanagementsystem 170 ermöglicht ebenfalls ein genaues Verfolgen und Planen von wertvollen Gütern, während die Frachtbetriebszeiten und die Kosten für die Nutzfahrzeuge reduziert werden können. Wertvolle und teure menschliche Ressourcen brauchen daher für die autonomen Funktionen nicht genutzt zu werden.

Optional können durch das System die Zielorte automatisch bestimmt werden, z.B. basierend auf dem genauen Frachtfluss und dem Ort eines gegebenen Frachthofes. Hierdurch kann eine weitere Optimierung der Zeit, die ein Nutzfahrzeug auf einem Frachthof verbringt, erreicht werden. Ebenso kann die Zeit, die eine bestimmte Fracht auf einem Frachthof verbringt und eventuell auch die Größe der eingeschränkten Bereiche und die Kosten der Fracht auf dem Hof optimiert werden.

Bei weiteren Ausführungsbeispielen ist das Fahrzeugschnittstellenmodul 110 ausgebildet, um den Fahrer des Nutzfahrzeuges in Bezug auf den tatsächlichen Lieferstatus zu beraten (beispielsweise basierend auf Frachteinschränkungen, der Verfügbarkeit von Zielfrachthöfen und anderen Parametern), um eine optimierte Transfergeschwindigkeit zu wählen.

### BEZUGSZEICHENLISTE

- 105: Netzwerk
- 110 (111,112,..): Fahrzeugschnittstellenmodul
- 120 (121,122,..): Fahrerschnittstellenmodul
- 130 (131,132,..): Betreiberschnittstellenmodul
- 140 (141,142,..): personenbezogenes Schnittstellenmodul
- 151,152: Bereichsinfrastrukturen
- 170: Frachtmanagement

## Patentansprüche

1. System zum Betreiben eines autonom fahrenden Nutzfahrzeuges in einem eingeschränkten Bereich, wobei der eingeschränkte Bereich eine Zufahrt, eine Ausfahrt und zumindest ein Zielpunkt aufweist, wo eine Handlung an dem Nutzfahrzeug ausführbar ist, das System umfasst:
- ein Fahrzeugschnittstellenmodul (110), das eine Schnittstelle für das Fahrzeug bereitstellt; und
- ein Betreiberschnittstellenmodul (130), das eine Kommunikationsschnittstelle für den Betreiber des eingeschränkten Bereiches bereitstellt, und ist
**gekennzeichnet durch**
ein Fahrerschnittstellenmodul (120), das eine Kommunikationsschnittstelle für den Fahrer bereitstellt und in einem mobilen elektronischen Gerät integriert ist,
wobei das Fahrzeugschnittstellenmodul, das Fahrerschnittstellenmodul und das Betreiberschnittstellenmodul ausgebildet sind, um drahtlos miteinander Informationen auszutauschen und das Fahrerschnittstellenmodul (120) ausgebildet ist, um zumindest die folgenden Funktionen bereitzustellen:
- eine Verbindung zu dem Betreiber herzustellen, wenn eine Funkinfrastruktur des Bereichs detektiert wurde,
- eine Übergabe des Fahrzeuges von dem Fahrer an den Betreiber durchzuführen, wenn eine Verbindung zu der Funkinfrastruktur hergestellt wurde oder das Betreiberschnittstellenmodul eine Anfrage gestellt hat, wobei nach der Übergabe des Fahrzeuges an den Betreiber der autonome Fahrzeugmodus aktiviert wird,
- eine Trennung von dem Betreiber nur dann durchzuführen, wenn der Fahrer des Fahrzeuges die Verantwortung über das Fahrzeug übernommen hat, wobei Fahrer nach der Übernahme der Verantwortung den autonomen Fahrzeugmodus deaktiviert.

2. System nach Anspruch 1,
**dadurch gekennzeichnet, dass**
das Fahrerschnittstellenmodul (120) ausgebildet ist, um zumindest eine der folgenden Funktionen bereitzustellen:
- den Fahrer des Nutzfahrzeuges in Bezug auf einen tatsächlichen Lieferstatus zu informieren oder zu beraten, insbesondere basierend auf Frachteinschränkungen, eine Verfügbarkeit von Zielfrachthöfen und anderen Parametern, um den Fahrer bei einer Optimierung einer Transfergeschwindigkeit zu helfen,
- eine Nachricht von/zu weiteren Teilnehmern, die mit der Bereichs-Infrastruktur verbunden sind, zu empfangen/zu senden.

3. System nach Anspruch 1 oder Anspruch 2,
**dadurch gekennzeichnet, dass**
das Fahrerschnittstellenmodul (120) ausgebildet ist, um Informationen über zumindest eines der folgenden Themen bereitzustellen:
- eine Verfügbarkeit von bekannten Infrastrukturen des Bereichs,
- einen Verbindungsstatus zu einer Bereichs-Infrastruktur von dem Fahrzeugschnittstellenmodul (110) und/oder dem Fahrerschnittstellenmodul (120),
- Identifizierung einer Verantwortung über das Nutzfahrzeug,
- eine voraussichtliche Fertigstellungszeit der Handlung an dem Nutzfahrzeug,
- eine vorgesehene Position des Nutzfahrzeuges zur Rückgabe der Verantwortung über das Nutzfahrzeug an den Fahrer,
- eine Ladung und Anweisungen für eine erfolgreiche Auslieferung, insbesondere über eine beabsichtigte Lieferzeit und über eine geschätzte Lieferzeit,
- Handlungen, die während des autonomen Fahrens ausgeführt wurden, insbesonderen Zeitdauer auf dem eingeschränkten Bereich, Zeitdauer an den Ladestationen oder anderen Zielorten, die von dem Nutzfahrzeug angefahren wurden, Wartezeiten seit Abschluss der Beladung, aufgetretene Fehler, gefährliche Situationen, die während des autonomen Betriebes aufgetreten sind, oder Ereignisse während einer Übernahme oder Übergabe, Statusinformationen des Fahrzeuges.

4. System nach einem der vorhergehenden Ansprüche, wobei in dem eingeschränkten Bereich ein Mitarbeiter mit einem personenbezogenen Schnittstellenmodul tätig ist,
**dadurch gekennzeichnet, dass**
zumindest eines der Schnittstellenmodule (110, 120, 130) ausgebildet ist, um eine Verbindung zu dem personenbezogenen Schnittstellenmodul (140) herzustellen, um mit dem Mitarbeiter in Verbindung zu treten.

5. System nach Anspruch 4,
**dadurch gekennzeichnet, dass**
das personenbezogenen Schnittstellenmodul (140) ausgebildet ist, um zumindest eine der folgenden Funktionalitäten bereitzustellen:
- dem Mitarbeiter zu erlauben, eine Handlung an einem verfügbaren Nutzfahrzeug zu starten, zu unterbrechen oder fertigzustellen, insbesondere unter Nutzung eines physischen oder Software-implementierten Schalters oder Knopfes,
- mehr Zeit zur Fertigstellung einer Handlung zu beantragen, falls die Handlung nicht in einem vorbestimmten Zeitrahmen, der durch den Betreiber definiert ist, fertigstellbar ist, insbesondere unter Nutzung eines physischen oder Software-implementierten Schalters oder Knopfes,
- Rückgabe des Nutzfahrzeuges an den Betreiber, um weitere autonome Handlungen auszulösen,
- Nachrichten von/an weiteren Teilnehmern, die mit der Bereichs-Infrastruktur in Verbindung stehen, zu empfangen/zu senden,
- Verfolgung von Frachtteilen, insbesondere bei Integration des personenbezogenen Schnittstellenmoduls (140) in ein Betreibersystem, mit einer individuellen Frachtidentifikation zu ermöglichen,
- Hochladen von Frachtinformationen an den Betreiber des eingeschränkten Bereiches.

6. System nach einem der vorhergehenden Ansprüche,
**dadurch gekennzeichnet, dass**
das personenbezogenen Schnittstellenmodul (140) ausgebildet ist, um Informationen über zumindest eines der folgenden Themen bereitzustellen:
- eine Liste von Mitarbeitern, die für eine Handlung zur Verfügung stehen, die eine Handlung ausführen oder eine Handlung fertiggestellt haben,
- Zielzeiten für jedes Fahrzeug, an dem gerade Handlungen ausgeführt werden,
- über einen Verbindungszustand zu der Bereichs-Infrastruktur, wobei der Verbindungszustand zu dem Fahrzeugschnittstellenmodul (110) und/oder zu dem Fahrerschnittstellenmodul (120) bereitgestellt wird,
- Ladegut, welches in dem Fahrzeug zu beladen oder zu entladen ist, insbesondere mit Angabe einer Quelle, eines Zieles und/oder von Spezialanweisungen.

7. System nach einem der vorhergehenden Ansprüche,
**dadurch gekennzeichnet, dass**
das Betreiberschnittstellenmodul (130) ausgebildet ist, zumindest eine der folgenden Funktionen bereitzustellen:
- Verbindungen zu dem Nutzfahrzeug, dem Fahrerschnittstellenmodul (120) und/oder dem personenbezogenen Schnittstellenmodul (140) bereitzustellen,
- eine manuelle oder automatische Übergabe der Verantwortung über das Nutzfahrzeug zu erlauben oder durchzuführen,
- eine manuelle Definition oder die Ausführung einer automatischen Definition von Zielorten für das autonome Nutzfahrzeug zu ermöglichen,
- Herunterladen von kartografische Daten des eingeschränkten Bereiches und Erzeugen oder Herunterladen einer optimalen Streckenführung zu Zielorten für ein autonom fahrendes Nutzfahrzeug zu ermöglichen,
- Einstellen einer manuellen Zielzeit oder Erzeugen einer automatischen Zielzeit für zumindest einen Stand der Handlung an dem Fahrzeug,
- ein manuelles oder ein automatisches Starten und Beenden von Handlungen des Nutzfahrzeuges zu ermöglichen,
- Informationen, die von dem personenbezogenen Schnittstellenmodul (140) des Mitarbeiters erhalten werden, zu handhaben, um den Fahrzeugzustand und eine verstrichene und eine verbleibende Zeitdauer für jedes Fahrzeug in den eingeschränkten Bereich zu aktualisieren,
- eine manuelle oder automatische Übergabe der Verantwortung über das Nutzfahrzeug auf eine Anfrage des Fahrers an den Fahrer zu übergeben,
- ein Senden und ein Empfangen von Nachrichten von Teilnehmern, die mit der Bereichs-Infrastruktur verbunden sind, zu erlauben.

8. System nach einem der vorhergehenden Ansprüche,
**dadurch gekennzeichnet, dass**
das Betreiberschnittstellenmodul (130) ausgebildet ist, um Informationen über zumindest eines der folgenden Themen bereitzustellen:
- einen Verbindungszustand von jedem Fahrzeug innerhalb des eingeschränkten Bereiches,
- einen Betriebszustand von jedem Fahrzeug in dem eingeschränkten Bereich,
- eine Position und Richtung von jedem Fahrzeug auf einer graphischen Karte des eingeschränkten Bereiches,
- von dem Fahrzeug übertragene Sensorsignale, die sich auf eine Überblicksdarstellung und/oder eine Frontaldarstellung und/oder aus einer anderen Perspektiven beziehen,
- eine Reihe oder Reihenfolge von Zielorten für jedes Fahrzeug,
- eine abgelaufene und eine voraussichtlich verbleibende Zeit und eine Abschlusszeit an einem Zielort für eine Handlung des Fahrzeuges in dem eingeschränkten Bereich,
- eine tatsächliche Fracht von jedem direkt oder indirekt gesteuerten Fahrzeug.

9. System nach einem der vorhergehenden Ansprüche,
**gekennzeichnet durch**
Mittel (170) umfasst, um Informationen über eine Fracht, die verladen oder entladen wurde, mit anderen eingeschränkten Bereichen zu teilen oder mit einem anderen Frachtmanagementsystem über weitere Schnittstellen auszutauschen.

10. System nach einem der vorhergehenden Ansprüche,
**dadurch gekennzeichnet, dass**
das Fahrerschnittstellenmodul (120) mit einer globalen Navigationssoftware integriert ist, um eine kontinuierliche Erneuerung der voraussichtlichen Lieferzeit von Frachtgütern zu ermöglichen.

11. System nach einem der vorhergehenden Ansprüche,
**dadurch gekennzeichnet, dass**
das Fahrerschnittstellenmodul (120) ausgebildet ist, um eine internetbasierte Kommunikation mit Zielfrachthöfen auszuführen, während das Fahrzeug mit der Fracht sich bewegt, um eine Optimierung des Frachtflusses bei den Zielfrachthöfen zu erreichen.

12. System nach einem der vorhergehenden Ansprüche,
**dadurch gekennzeichnet, dass**
die Schnittstellenmodule (110, 120, 130, 140) zumindest eine der folgenden Komponenten umfassen oder darin integriert sind: eine Computereinheit, ein Mobiltelefon, ein Tablett, eine Funknetzwerkeinheit, die ausgebildet ist, um zumindest das eingeschränkte Gebiet abzudecken.

13. Managementsystem,
**gekennzeichnet durch:**
- eine oder mehrere Systeme nach einem der Ansprüche 1 bis 12;
- ein Frachtmanagement (170); und
- eine Schnittstelle für eine Überwachungsperson,
wobei das Managementsystem ausgebildet ist, um zumindest eine der folgenden Funktionen bereitzustellen:
- automatisches Bestimmen von Zielorten, basierend auf dem genauen Frachtfluss und dem Ort eines gegebenen Frachthofes, um so eine Zeit zu optimieren, die ein Nutzfahrzeug auf einem Frachthof verbringt,
- Informationen an der Schnittstelle bereitstellen, um so eine Überwachung der mehreren eingeschränkten Bereiche einschließlich darauf autonom operierender Nutzfahrzeuge durch die Überwachungsperson zu ermöglichen.

14. Verfahren zum Betreiben eines autonom fahrenden Nutzfahrzeuges in einem eingeschränkten Bereich,
**gekennzeichnet durch:**
- Herstellen einer drahtlosen Verbindung zwischen einem Fahrzeugschnittstellenmodul (110), einem Fahrerschnittstellenmodul (120) und einem Betreiberschnittstellenmodul (130) eines Systems nach Anspruch 1;
- Ausführen von zumindest einer Funktion oder Bereitstellen von zumindest einer Information durch ein Fahrerschnittstellenmodul (120) eines Systems nach einem der Ansprüche 1 bis 3;
- Ausführen von zumindest einer Funktion oder Bereitstellen von zumindest einer Information durch ein Betreiberschnittstellenmodul (130) eines Systems nach Anspruch 7 oder Anpruch 8.

15. Computerprogrammprodukt mit darauf gespeicherter Software, die ausgebildet ist, um das Verfahren nach Anspruch 14 auszuführen, wenn die Software auf einer Datenverarbeitungseinheit ausgeführt wird.

## Claims

1. System for operating an autonomously driving utility vehicle in a limited region, wherein the limited region has an entrance, an exit and at least one target point, where an activity at the utility vehicle can be carried out, the system comprising:
- a vehicle interface module (110) which provides an interface for the vehicle; and
- an operator interface module (130) which provides a communication interface for the operator of the limited region, and is
**characterised by**
a driver interface module (120) which provides a communication interface for the driver and is integrated in a mobile electronic device, wherein the vehicle interface module, the driver interface module and the operator interface module are configured to exchange information wirelessly with one another and the driver interface module (120) is configured to provide at least the following functions:
- to establish a connection to the operator when a radio infrastructure of the region has been detected,
- to carry out a handover of the vehicle from the driver to the operator when a connection to the radio infrastructure has been established or the operator interface module has issued a request, wherein after the handover of the vehicle to the operator the autonomous vehicle mode is activated,
- to carry out a separation from the operator only when the driver of the vehicle has assumed responsibility for the vehicle, wherein driver deactivates the autonomous vehicle mode after assuming the responsibility.

2. System according to claim 1,
**characterised in that**
the driver interface module (120) is configured to provide at least one of the following functions:
- to inform or advise the driver of the utility vehicle in relation to an actual delivery status, in particular on the basis of freight limitations, an availability of destination freight yards and other parameters, in order to help the driver with an optimization of a transfer speed,
- to receive/send a message from/to further subscribers which are connected to the region-infrastructure.

3. System of claim 1 or claim 2,
**characterised in that**
the driver interface module (120) is configured to provide information regarding at least one of the following topics:
- an availability of known infrastructures of the region,
- a connection status to a region-infrastructure from the vehicle interface module (110) and/or the driver interface module (120),
- identifying a responsibility for the utility vehicle,
- a probable finishing time for the activity at the utility vehicle,
- an intended position of the utility vehicle for returning the responsibility for the utility vehicle back to the driver,
- a loading and instructions for a successful delivery, in particular regarding an intended delivery time and regarding an estimated delivery time,
- activities which were carried out during the autonomous driving, in particular time duration on the limited region, time duration at the loading stations or other destination locations to which the utility vehicle was driven, waiting time since completion of loading, errors which occurred, dangerous situations which occurred during the autonomous operation, or events during a taking-over or handover, status information of the vehicle.

4. System according to any of the preceding claims, wherein in the limited region a member of staff with a person-related interface module is active,
**characterised in that**
at least one of the interface modules (110, 120, 130) is configured to establish a connection to the person-related interface module (140) in order to come into contact with the member of staff.

5. System according to claim 4,
**characterised in that**
the person-related interface module (140) is configured to provide at least one of the following features:
- to permit the member of staff to start, to interrupt or to complete an activity at an available utility vehicle, in particular by using a physical or software-implemented switch or button,
- to request more time for finishing an activity, if the activity cannot be finished within a predetermined time frame which is defined by the operator, in particular by using a physical or software-implemented switch or button,
- returning the utility vehicle to the operator in order to trigger further autonomous activities,
- to receive/send messages from/to further subscribers which are connected to the region-infrastructure,
- to facilitate tracking of freight items, in particular when integrating the person-related interface module (140) in an operator system, with an individual freight identification,
- uploading freight information to the operator of the limited region.

6. System according to any of the preceding claims,
**characterised in that**
the person-related interface module (140) is configured to provide information regarding at least one of the following topics:
- a list of members of staff which are available for an activity, which are carrying out an activity or which have finished an activity,
- target times for each vehicle at which activities are currently being carried out,
- about a connection state to a region-infrastructure, wherein the connection state to the vehicle interface module (110) and/or the driver interface module (120) is provided,
- cargo which is to be loaded into or unloaded from the vehicle, in particular with specification of a source, a destination and/or of special instructions.

7. System according to any of the preceding claims,
**characterised in that**
the operator interface module (130) is configured to provide at least one of the following functions:
- to provide connections to the utility vehicle, the driver interface module (120) and/or the person-related interface module (140),
- to permit or to carry out a manual or automatic handover of the responsibility for the utility vehicle,
- to facilitate a manual definition or the implementation of an automatic definition of destination locations for the autonomous utility vehicle,
- to facilitate the download of cartographic data of the limited region and the generation or download of an optimum route to destination locations for an autonomously driving utility vehicle,
- setting a manual target time or generating an automatic target time for at least one state of the activity at the vehicle,
- to facilitate a manual or an automatic starting and ending of activities of the utility vehicle,
- to handle information which are obtained by the person-related interface module (140) of the member of staff, in order to update the vehicle condition and an elapsed and remaining time duration for each vehicle in the limited region,
- to handover a manual or automatic handover of the responsibility for the utility vehicle to the driver when requested by the driver,
- to permit sending and receiving of messages from subscribers which are connected to the region-infrastructure.

8. System according to any of the preceding claims,
**characterised in that**
the operator interface module (130) is configured to provide information regarding at least one of the following topics:
- a connecting state of each vehicle within the limited region,
- an operating state of each vehicle in the limited region,
- a position and direction of each vehicle on a graphical map of the limited region,
- sensor signals, transmitted by the vehicle, which relate to an overall visual representation and/or a frontal visual representation and/or a visual representation from another perspective,
- a series or sequence of destination locations for each vehicle,
- an elapsed and a probable remaining time and a finishing time at a destination location for an activity of the vehicle in the limited region,
- an actual load of each directly or indirectly steered vehicle.

9. System according to any of the preceding claims,
**characterised in that**
it comprises means (170) in order to share information regarding a freight which was loaded or unloaded with other limited regions or to exchange it with other freight management systems via further interfaces.

10. System according to any of the preceding claims,
**characterised in that**
the driver interface module (120) is integrated with a global navigation software in order to facilitate a continuous updating of the probable delivery time of freight.

11. System according to any of the preceding claims,
**characterised in that**
the driver interface module (120) is configured to carry out an internet-based communication with destination freight yards while the vehicle with the freight is in motion, in order to achieve an optimization of the flow of freight at the destination freight yards.

12. System according to any of the preceding claims,
**characterised in that**
the interface modules (110, 120, 130, 140) comprise at least one of the following components or are integrated therein: a computer unit, a mobile telephone, a tablet, a radio network unit which is configured to cover at least the limited area.

13. Management system,
**characterized by:**
- one or more systems according to any of claims 1 to 12;
- a freight management (170); and
- an interface for a monitoring person,
wherein the management system is configured to provide at least one of the following functions:
- automatic determination of destination locations based on the precise flow of freight and the location of a given freight yard, in order thus to optimize a time which a utility vehicle spends on a freight yard,
- providing information at the interface in order thus to facilitate a monitoring of the several limited regions, including utility vehicles operating autonomously thereon, on the part of the monitoring person.

14. Method for operating an autonomously driving utility vehicle in a limited region,
**characterized by:**
- establishing a wireless connection between a vehicle interface module (110), a driver interface module (120) and an operator interface module (130) of a system according to claim 1;
- carrying out at least one function or providing at least one item of information using a driver interface module (120) of a system according to any of claims 1 to 3;
- carrying out at least one function or providing at least one item of information using an operator interface module (130) of a system according to claim 7 or claim 8.

15. Computer program product with software stored thereon which is configured to carry out the method according to claim 14 when the software is carried out on a data processing unit.

## Revendications

1. Système de fonctionnement d'un véhicule utilitaire autonome dans une zone restreinte, dans lequel la zone restreinte présente une entrée, une sortie et au moins un point de destination où une action peut être effectuée sur le véhicule utilitaire, le système comprenant :
- un module d'interface de véhicule (110) qui fournit une interface pour le véhicule ; et
- un module d'interface d'opérateur (130) qui fournit une interface de communication à l'opérateur de la zone restreinte, et est
**caractérisé par**
un module d'interface de conducteur (120) qui fournit une interface de communication pour le conducteur et est intégré dans un appareil électronique mobile, dans lequel le module d'interface de véhicule, le module d'interface de conducteur et le module d'interface d'opérateur sont conçus pour échanger des informations sans fil les uns avec les autres, et le module d'interface de conducteur (120) est conçu pour fournir au moins les fonctions suivantes :
- établir une connexion avec l'opérateur lorsqu'une infrastructure radio de la zone a été détectée,
- effectuer un transfert du véhicule du conducteur à l'opérateur lorsqu'une connexion à l'infrastructure radio a été établie ou lorsque le module d'interface d'opérateur a émis une requête, dans lequel le modèle de véhicule autonome est activé après le transfert du véhicule à l'opérateur,
- effectuer une séparation de l'opérateur uniquement lorsque le conducteur du véhicule a assumé la responsabilité du véhicule, dans lequel le conducteur désactive le mode de véhicule autonome après avoir assumé la responsabilité du véhicule.

2. Système selon la revendication 1,
**caractérisé en ce que**
le module d'interface de conducteur (120) est conçu pour fournir au moins une des fonctions suivantes :
- informer ou conseiller le conducteur du véhicule utilitaire sur un état de livraison réel, en particulier sur la base de restrictions de fret, d'une disponibilité de dépôts de fret de destination et d'autres paramètres, pour aider le conducteur à optimiser une vitesse de transfert,
- recevoir/envoyer un message delà d'autres participants connectés à l'infrastructure de la zone.

3. Système selon la revendication 1 ou la revendication 2,
**caractérisé en ce que**
le module d'interface de conducteur (120) est conçu pour fournir des informations sur au moins un des thèmes suivants :
- une disponibilité d'infrastructures connues de la zone,
- un état de connexion à une infrastructure de la zone depuis le module d'interface de véhicule (110) et/ou le module d'interface de conducteur (120),
- l'identification d'une responsabilité du véhicule utilitaire,
- un temps d'achèvement prévu de l'action sur le véhicule utilitaire,
- une position prévue du véhicule utilitaire pour la restitution de la responsabilité du véhicule utilitaire au conducteur,
- une charge et des instructions pour une livraison réussie, en particulier un délai de livraison prévu et un délai de livraison estimé,
- des actions effectuées pendant la conduite autonome, en particulier le temps passé dans la zone restreinte, le temps passé aux stations de chargement ou à d'autres destinations qui sont desservies par le véhicule utilitaire, des temps d'attente depuis la fin du chargement, des erreurs survenues, des situations dangereuses survenues pendant le fonctionnement autonome ou des événements survenus pendant une prise en charge ou un transfert, des informations d'état du véhicule.

4. Système selon l'une quelconque des revendications précédentes, dans lequel un collaborateur équipé d'un module d'interface personnel est actif dans la zone restreinte,
**caractérisé en ce que**
au moins un des modules d'interface (110, 120, 130) est conçu pour établir une connexion avec le module d'interface personnel (140) pour entrer en contact avec le collaborateur.

5. Système selon la revendication 4,
**caractérisé en ce que**
le module d'interface personnel (140) est conçu pour fournir au moins une des fonctionnalités suivantes :
- permettre au collaborateur de démarrer, d'interrompre ou de terminer une action sur un véhicule utilitaire disponible, en particulier en utilisant un interrupteur ou bouton physique ou mis en oeuvre par logiciel,
- demander plus de temps pour terminer une action si l'action ne peut pas être terminée dans un délai prédéterminé défini par l'opérateur, en particulier en utilisant un interrupteur ou un bouton physique ou mis en oeuvre par logiciel,
- restituer le véhicule utilitaire à l'opérateur pour déclencher des actions autonomes supplémentaires,
- recevoir/envoyer des messages delà des participants supplémentaires qui sont connectés à l'infrastructure de la zone,
- permettre le suivi d'éléments de fret, en particulier en cas d'intégration du module d'interface personnel (140) dans un système d'opérateur, avec une identification de fret individuelle,
- télécharger des informations de fret vers l'opérateur de la zone restreinte.

6. Système selon l'une quelconque des revendications précédentes,
**caractérisé en ce que**
le module d'interface personnel (140) est conçu pour fournir des informations sur au moins un des thèmes suivants :
- une liste de collaborateurs disponibles pour une action qui effectuent une action ou ont terminé une action,
- les temps de destination pour chaque véhicule sur lequel des actions sont en cours d'exécution,
- à propos d'un état de connexion à l'infrastructure de la zone, dans lequel l'état de connexion est fourni au module d'interface de véhicule (110) et/ou au module d'interface de conducteur (120),
- la marchandise qui est à charger ou à décharger dans le véhicule, en particulier en indiquant une source, une destination et/ou des instructions spéciales.

7. Système selon l'une quelconque des revendications précédentes,
**caractérisé en ce que**
le module d'interface d'opérateur (130) est conçu pour fournir au moins une des fonctions suivantes :
- fournir des connexions avec le véhicule utilitaire, le module d'interface de conducteur (120) et/ou le module d'interface personnel (140),
- permettre ou effectuer un transfert manuel ou automatique de responsabilité du véhicule utilitaire,
- permettre une définition manuelle ou l'exécution d'une définition automatique de destinations pour le véhicule utilitaire autonome,
- permettre le téléchargement de données cartographiques de la zone restreinte et la création ou le téléchargement d'un itinéraire optimal vers des destinations pour un véhicule utilitaire autonome,
- définir un temps de destination manuel ou générer un temps de destination automatique pour au moins un état de l'action sur le véhicule,
- permettre un démarrage et un arrêt manuels ou automatiques des actions du véhicule utilitaire,
- gérer des informations reçues du module d'interface personnel (140) du collaborateur pour mettre à jour l'état de véhicule et un temps écoulé et un temps restant pour chaque véhicule dans la zone restreinte,
- transférer manuellement ou automatiquement la responsabilité du véhicule utilitaire suite à une demande du conducteur au conducteur,
- permettre un envoi et une réception de messages de participants qui sont connectés à l'infrastructure de la zone.

8. Système selon l'une quelconque des revendications précédentes,
**caractérisé en ce que**
le module d'interface d'opérateur (130) est conçu pour fournir des informations sur au moins un des thèmes suivants :
- un état de connexion de chaque véhicule à l'intérieur de la zone restreinte,
- un état de fonctionnement de chaque véhicule dans la zone restreinte,
- une position et une direction de chaque véhicule sur une carte graphique de la zone restreinte,
- des signaux de capteur transmis par le véhicule qui se rapportent à une représentation d'ensemble et/ou à une représentation frontale et/ou à partir d'une autre perspective,
- une série ou un ordre de destinations pour chaque véhicule,
- un temps écoulé et un temps prévu restant et un temps d'achèvement à une destination pour une action du véhicule dans la zone restreinte,
- un fret réel de chaque véhicule commandé directement ou indirectement.

9. Système selon l'une quelconque des revendications précédentes,
**caractérisé par**
des moyens (170) pour partager des informations sur un fret qui a été chargé ou déchargé avec d'autres zones restreintes ou pour les échanger avec un autre système de gestion de fret par l'intermédiaire d'interfaces supplémentaires.

10. Système selon l'une quelconque des revendications précédentes,
**caractérisé en ce que**
le module d'interface de conducteur (120) est intégré à un logiciel de navigation global pour permettre le renouvellement continu du délai de livraison prévu de marchandises.

11. Système selon l'une quelconque des revendications précédentes,
**caractérisé en ce que**
le module d'interface de conducteur (120) est conçu pour effectuer une communication basée sur Internet avec des dépôts de fret de destination pendant que le véhicule se déplace avec le fret pour optimiser le flux de fret aux dépôts de fret de destination.

12. Système selon l'une quelconque des revendications précédentes,
**caractérisé en ce que**
les modules d'interface (110, 120, 130, 140) comprennent ou intègrent au moins un des composants suivants : une unité informatique, un téléphone mobile, une tablette, une unité de réseau radio qui est conçue pour couvrir au moins la zone restreinte.

13. Système de gestion,
**caractérisé par** :
- un ou plusieurs systèmes selon l'une quelconque des revendications 1 à 12;
- une gestion de fret (170) ; et
- une interface pour une personne chargée de la surveillance,
dans lequel le système de gestion est conçu pour fournir au moins une des fonctions suivantes :
- déterminer automatiquement des destinations sur la base du flux de fret précis et de l'emplacement d'un dépôt de fret donné pour ainsi optimiser un temps passé par un véhicule utilitaire dans un dépôt de fret,
- fournir des informations à l'interface pour ainsi permettre à la personne chargée de la surveillance de surveiller les plusieurs zones restreintes, y compris les véhicules utilitaires qui y opèrent de manière autonome.

14. Procédé de fonctionnement d'un véhicule utilitaire autonome dans une zone restreinte,
**caractérisé par** :
- l'établissement d'une connexion sans fil entre un module d'interface de véhicule (110), un module d'interface de conducteur (120) et un module d'interface d'opérateur (130) d'un système selon la revendication 1 ;
- l'exécution d'au moins une fonction ou la fourniture d'au moins une information par un module d'interface de conducteur (120) d'un système selon l'une quelconque des revendications 1 à 3 ;
- l'exécution d'au moins une fonction ou la fourniture d'au moins une information par un module d'interface d'opérateur (130) d'un système selon la revendication 7 ou la revendication 8.

15. Produit de programme informatique sur lequel un logiciel est stocké, qui est conçu pour mettre en oeuvre le procédé selon la revendication 14 lorsque le logiciel est exécuté sur une unité de traitement de données.
